# EUROPÄISCHE PATENTSCHRIFT

(11) **EP 4 219 964 B1**
(45) Veröffentlichungstag und Bekanntmachung des Hinweises auf die Patenterteilung: **23.07.2025**
(21) Anmeldenummer: 23152889.4
(22) Anmeldetag: 23.01.2023
(51) Int. Cl.: F16C 11/06, F16C 11/08, F16F 1/38

(54) **KUGELGELENK, INSBESONDERE FÜR FAHRZEUGE**
BALL JOINT, ESPECIALLY FOR VEHICLES
JOINT À ROTULE, NOTAMMENT POUR VÉHICULE AUTOMOBILE

(30) Priorität: 31.01.2022 DE 102022102185
(43) Veröffentlichungstag der Anmeldung: 02.08.2023
(73) Patentinhaber: Jörn GmbH, 71336 Waiblingen (DE)
(72) Erfinder: Reinke, Kai, 71686 Remseck (DE); Mursinsky, Jörg, 71522 Backnang (DE)
(74) Vertreter: Liebl, Thomas

(56) Entgegenhaltungen:
- DE-A1- 102016 008 773
- FR-A1- 2 691 767
- US-A1- 2009 249 581

## Beschreibung

Die Erfindung betrifft ein Kugelgelenk, insbesondere für Fahrzeuge, nach dem Oberbegriff des Anspruchs 1.

Kugelgelenke weisen im Unterschied zur einfachen, üblichen Buchsenlagern eine hohe Steifigkeit und Belastbarkeit in axialer Richtung insbesondere bei einem Einsatz mit kardanischen Bewegungen auf. Ein dazu bekanntes Kugelgelenk (DE 10 2016 008 773 A1) besteht aus einem Kugelzapfen als Lagerinnenteil und erstem Lagerteil, mit einem Kugelteil als ballige Verdichtung und zwei beidseitig gegenüberliegend vom Kugelteil abragenden Anschlussspratzen. Ein Lagergehäuse als zweites Lagerteil umgibt das Kugelteil, wobei zwischen dem Lagergehäuse und dem Kugelteil ein Elastomer-Metall-Element unter Vorspannung angeordnet ist. Das Elastomer-Metall-Element besteht hier aus zwei Kugelschalenhälften, die auf das Kugelteil radial aufgesteckt sind und im fertig montierten Zustand des Kugelgelenks axial zusammengespannt und mit einem Sicherungsring gesichert sind. Bei anderen allgemein bekannten Ausführungsformen sind die zwei Kugelschalenhälften axial aufgesteckt oder eine Elastomerschicht ist am Kugelteil anvulkanisiert. Weiter sind Ausführungsformen mit nur einer seitlichen Anschlusspratze bekannt (DE 10 2010 045 677 B4).

Solche bekannten elastischen Kugelgelenke für die Übertragung hoher Lasten sind regelmäßig sehr schwer, wobei der Kugelzapfen als materialeinheitliches Lagerinnenteil, meist als Bolzen, Pratze oder Rohr mit einer kugelartigen und balligen Verdickung ausgeformt ist. Mit dem Begriff "Kugelgelenk" werden in der vorliegenden Anmeldung wie üblich somit nicht nur Ausformungen in der reinen Kugelgestalt, sondern auch ähnliche, kugelartige, ballige Ausformungen bezeichnet. Eine solche kugelartige Ausformung beinhaltet eine relativ große Masse und hat als wesentliche Funktion die Bereitstellung einer stabilen kugelartigen Oberfläche, über die unter Zwischenschaltung von Elastomermaterial Kräfte und Momente übertragen werden sollen.

Eine solche stabile kugelartige Oberfläche wird bisher dadurch geschaffen, dass der Kugelzapfen einteilig und materialeinheitlich aus Metall, insbesondere aus Stahl hergestellt ist, was zu dem ungünstig hohen Gewicht solcher Kugelgelenke führt. Bei höheren Stückzahlen gleicher Kugelgelenke können die Kugelzapfen insbesondere als Guss- oder Schmiedeteile hergestellt werden. Bei kleinen Stückzahlen ist dafür dieser Herstellaufwand zu groß und die Kugelzapfen werden dann spanend hergestellt. Dabei werden wegen der Kugelform Halbzeuge mit großem Durchmesser bei entsprechend viel Zerspanungsarbeit verwendet, was zu einer kostenintensiven und umweltbelastenden Herstellung führt.

Der wesentliche Nachteil solcher Kugelgelenke besteht in deren hohem Gewicht, das insbesondere beim Einsatz von großen schweren Kugelgelenken in Nutzfahrzeugen, zum Beispiel Lastkraftwagen, oder gegebenenfalls auch in Eisenbahndrehgestellen die Energieeffizienz solcher Fahrzeuge reduziert und den Forderungen nach erhöhtem Umweltschutz und verbesserter Nachhaltigkeit entgegensteht.

Weiter ist ein Kugelgelenk bekannt (DE 10 2016 008 773 A1), bei dem zwischen einem metallischen Kugelteil und dem Elastomermaterial für eine Reibungseinstellung eine relativ dünne Kunststoff-Zwischenlage angebracht ist.

Auch bei einem ähnlichen bekannten Kugelgelenk (US 2009/249581 A1) ist eine dünne Kunststoff-Zwischenlage vorgesehen. Mit solchen dünnen Kunststoff-Zwischenlagen wird das Gewicht solcher Kugelgelenke nur wenig reduziert.

Aufgabe der Erfindung ist es daher, ein gattungsgemäßes Kugelgelenk so weiterzubilden, dass damit eine deutliche Gewichtsreduzierung erreichbar ist und zudem Möglichkeiten für eine einfache und kostengünstige Herstellung vorliegen.

Diese Aufgabe wird mit den Merkmalen des Anspruchs 1 gelöst. Vorteilhafte Weiterbildungen sind Gegenstand der Unteransprüche.

Gemäß Anspruch 1 weist der Kugelzapfen des Kugelgelenks ein langgestrecktes, metallisches Zapfenteil auf, das die eine Anschlusspratze oder die beiden Anschlusspratzen, sowie ein einteilig und materialeinheitlich daran anschließendes Kugelinnenteil bildet. Zur Ausbildung des Kugelteils sind auf das metallische Kugelinnenteil zwei Kunststoffschalen aufgesteckt, die eine ballige Verdickung bilden, wobei die zwei Kunststoffschalen mit Halbschalenrändern an einer Trennebene aneinanderliegen und an der Außenkontur des Kugelinnenteils mit einer Schaleninnenkontur als Gegenkontur formschlüssig anliegen. Die beiden Kunststoffschalen umschließen dabei das Kugelinnenteil mit der balligen, quer zur Pratzenrichtung liegenden Verdickung.

Bei einer erfindungsgemäß ersten Ausführung weisen die zwei Kunststoffhalbschalen jeweils im Mittenbereich als Verdickung eine Aufwölbung auf. Die zwei Kunststoffhalbschalen sind bei diesen Ausführungen quer zur Pratzenrichtung radial auf das Pratzeninnenteil aufgesteckt und liegen mit Kunststoffschalenrändern an einer in Pratzenrichtung verlaufenden Trennebene aneinander, wobei die beiden Aufwölbungen das Kugelteil ausbilden.

In einer erfindungsgemäß ähnlichen, alternativen zweiten Ausführung weisen die zwei Kunststoffhalbschalen jeweils eine axiale Durchgangsöffnung und im Seitenbereich eine Aufwölbung auf. Die zwei Kunststoffhalbschalen sind hier mit der Durchgangsöffnung in Pratzenrichtung axial auf das Kugelinnenteil jeweils von einer Seite her aufgesteckt und liegen mit Halbschalenrändern an einer quer zur Pratzenrichtung verlaufenden Trennebene dergestalt aneinander, dass die beiden gegeneinander gerichteten Aufwölbungen als Verdickung das Kugelteil ausbilden.

Damit besteht der gesamte Kugelzapfen und insbesondere das Kugelteil mit der balligen Verdickung aus separaten Teilen, die zusammengesetzt sind. Der Kugelzapfen mit dem Kugelinnenteil besteht aus Metall und die gesamte ballige Verdickung aus Kunststoff und nicht aus Metallmaterial. Da der verwendete Kunststoff ein kleineres, spezifisches Gewicht als das Metallmaterial aufweist, ist der Kugelzapfen des Kugelgelenks insgesamt mit einem vergleichsweise deutlich geringeren Gewicht herstellbar als bei einem reinen Metallteil.

Beim Einsatz derartiger stark gewichtsreduzierter Kugelgelenke ergibt sich eine vorteilhafte Steigerung der Energieeffizienz beim Einsatz in Fahrzeugen. Zudem können solche gewichtsreduzierten Kugelgelenke im Vergleich zu bisherigen Herstellkosten mit vergleichbaren oder je nach Ausführungsformen mit geringeren Kosten hergestellt werden. Insbesondere können bei geringen Stückzahlen die Zerspanungsarbeit und der Metallabfall reduziert werden, sodass dann wesentlich geringere Herstellkosten auftreten. Vorteile bei der Herstellung können sich insbesondere auch dadurch ergeben, dass die Einzelteile des Kugelzapfes separat herstellbar sind, wobei das langgestreckte, metallische Zapfenteil als Halbzeug und Ausgangsmaterial als kostengünstiger Stahlstrangabschnitt herstellbar ist.

Ersichtlich können dabei sowohl radial als auch axial aufgesteckte Kunststoffhalbschalen jeweils vorteilhaft als Gleichteile hergestellt sein. Je nach Ausgestaltung der balligen Verdickung können gegebenenfalls bei gleichen Zapfenteilen vorteilhaft aktuelle Gegebenheiten hinsichtlich Belastungen, Einbaugegebenheiten, etc. mit Dimensionierungen berücksichtigt werden. Besonders bevorzugt sollen die beiden Kunststoffhalbschalen einteilig und materialeinheitlich verwendet werden. Möglicherweise kann es insbesondere bei der Herstellung in besonderen Fällen zweckmäßig sein, die Kunststoffhalbschalen aus einzelnen Schalenteilen zusammenzusetzen, wobei solche Ausführungen auch vom Schutz mitumfasst sein sollen.

Das langgestreckte, metallische Zapfenteil kann als Halbzeug und Ausgangsmaterial je nach den Gegebenheiten einen kreisförmigen Querschnitt aufweisen und ein Rundstahlabschnitt oder ein Stahlrohrabschnitt sein oder einen rechteckigen Querschnitt als Flachstahlabschnitt aufweisen. Beide Arten von Zapfenteilen sind einfach und kostengünstig als Ausgangsmaterial zu beschaffen.

In einer besonders vorteilhaften Weiterbildung soll das Zapfenteil im Bereich des Kugelinnenteils und damit im Bereich der aufgesteckten Kunststoffhalbschalen eine Außenkontur mit wenigstens einer Ausnehmung und/oder mit wenigstens einer Erhebung aufweisen. Eine solche Außenkontur kann für eine Axialsicherung oder Verdrehsicherung relativ einfach am metallischen Zapfenteil hergestellt werden. Die entsprechende Gegenkontur aus Schaleninnenkontur kann zudem sehr einfach bei den vorzugsweise im Spritzgießverfahren hergestellten Kunststoffhalbschalen ausgebildet werden.

Konkret kann die wenigstens eine Ausnehmung als Axialsicherung aus einer oder mehreren, vorzugsweise zwei versetzten, nutenförmig umlaufenden Einsparungen an einem Zapfenteil mit kreisrundem Querschnitt und mit radial aufgesteckten Kunststoffhalbschalen ausgebildet sein.

Entsprechend kann als Axialsicherung die wenigstens eine Ausnehmung aus einer oder mehreren versetzten, vorzugsweise zwei, quer zur Pratzenrichtung verlaufenden, nutenförmigen Einsparungen an einer oder gegenüberliegenden Seiten eines Zapfenteils mit rechteckigem Querschnitt und mit radial aufgesteckten Kunststoffhalbschalen ausgebildet sein.

Anstelle der hier konkret beanspruchten Einsparungen am Zapfenteil als Axialsicherung mit entsprechend eingreifenden Erhebungen an den Schaleninnenkonturen soll hier auch die ledigliche geometrische Umkehrung vom Schutz umfasst sein mit umlaufenden Erhebungen am Zapfenteil und entsprechenden Ausnehmungen an den Schaleninnenkonturen jeweils bei radial aufgesteckten Kunststoffhalbschalen.

Bei einer Ausführung mit axial aufgesteckten Kunststoffhalbschalen wird als Axialsicherung wenigstens eine Erhebung am Zapfenteil in einem mittleren Querebenenbereich des Kugelteils als Bund beansprucht.

Bei den vorstehenden Ausführungsformen können die Kunststoffhalbschalen bei hoher Verdrehbelastung auf dem Zapfenteil durchrutschen. Dies kann je nach den Gegebenheiten als Schutz gegen eine Zerstörung des Kugelgelenks bei extremen Verdrehbelastungen gewollt sein. In der Regel sollen jedoch gleitende Relativbewegungen zwischen dem Zapfenteil und den Kunststoffhalbschalen unterbunden werden, um exakt definierbare Lagereigenschaften ohne Materialabrieb zu erhalten.

In einer besonders bevorzugten Weiterbildung wird daher als Verdrehsicherung die wenigstens eine Ausnehmung und/oder Erhebung bei einem Zapfenteil mit kreisrundem Querschnitt in Zapfenlängsrichtung ausgebildet mit entsprechender Gegenstruktur an axial oder radial aufgesteckten Kunststoffhalbschalen. Die Verdrehsicherung kann vorteilhaft zusammen mit der vorstehend angegebenen Axialsicherung ausgebildet sein.

Das wenigstens eine zwischen dem Kugelteil und dem Lagergehäuse im fertig montierten Zustand des Kugelgelenks unter Vorspannung angeordnete und das Kugelteil umgreifende Elastomerelement weist erfindungsgemäß eine Elastomerschicht auf, die am Kugelteil anvulkanisiert ist, dergestalt dass die Elastomerschicht separat und zweiteilig auf jeder der beiden Kunststoffhalbschalen anvulkanisiert ist und die beiden aufgesteckten Kunststoffhalbschalen mit ihren Elastomerschichten dann die komplette Elastomerschicht am Kugelteil ergibt. Damit können hier energiesparend im Vulkanisierprozess nur jeweils die Halbschalen ohne das Zapfenteil aufgeheizt werden. Alternativ kann die Elastomerschicht je nach den Gegebenheiten auch durchgehend einteilig am Kugelteil mit den bereits am Kugelinnenteil aufgesteckten Kunststoffhalben anvulkanisiert werden.

Bevorzugt kann der erfindungsgemäße, gewichtsreduzierte Kugelzapfen in Verbindung mit bekannten weiteren Ausgestaltungen eines Kugelgelenks eingesetzt werden, bei denen insbesondere ein Elastomer-Metall-Element verwendet wird, bei dem zusätzlich zur Elastomerschicht jeweils seitlich anvulkanisierte Stützringe in an sich bekannter Weise anvulkanisiert sind.

Weiter können zusätzlich zum balligen Kugelteil beidseitig daran anschließende, an den Kunststoffhalbschalen ausgebildete, zapfenseitige Ringschultern angebracht sein, wobei an beiden axial gegenüberliegenden Seiten der Elastomerschicht jeweils ein vorzugsweise metallischer Stützring anvulkanisiert ist zur Aufbringung einer Vorspannung in der Elastomerschicht. Dabei soll das Lagergehäuse einen Aufnahmeraum, vorzugsweise einen zylindrischen Aufnahmeraum aufweisen, in dem der Kugelzapfen mit dem Kugelteil mit der balligen Verdickung gegebenenfalls mit Ringschultern und der umgebenden Elastomerschicht mit den Stützringen aufgenommen ist.

Die Elastomerschicht soll an der Innenseite des Aufnahmeraums ortsfest durch Vorspannung anliegen, indem der Kugelzapfen axial seitlich in den Aufnahmeraum eingesetzt und mit einem Stützring an einem umlaufenden Stützsteg im Aufnahmeraum abgestützt ist. Der gegenüberliegende Stützring ist nach einer Verlagerung durch eine mit einer Pressvorrichtung aufgebrachten, axialen Einpresskraft als Vorspannkraft in der verlagerten Position mit einem Sicherungsring in einer umlaufenden Sicherungsnut im Aufnahmeraum fixiert.

Der in Verbindung mit den Kunststoffschalenteilen verwendete Kunststoff muss eine hohe Festigkeit aufweisen, die den auftretenden meist hohen Belastungen am Kugelgelenk, insbesondere bei einem Kugelgelenk für Fahrzeuge, ohne Schaden widersteht. Dementsprechend soll der Kunststoff bevorzugt ein hochfester Kunststoff mit einer Zugfestigkeit von 80 bis 250 MPa und/oder einer Streckspannung/Bruchspannung von 50 bis 300 MPa sein, wobei die Zugfestigkeit und/oder die Streckspannung/Bruchspannung jeweils gemäß DIN EN ISO 527 bestimmt sind. Die Streckspannung ist dabei die Zugspannung, bei der die Kurve im Spannungs-Dehnungs-Diagramm das erste Mal horizontal wird und sich die Probe einschnürt. Da es bei harten, relativ spröden Kunststoffen kein Strecken gibt, wird hier die Bruchspannung als kennzeichnender Wert verwendet. Sie ist also die Zugspannung im Zeitpunkt des Bruchs. Streckspannung und Bruchspannung weichen in der Praxis meist nicht sehr stark voneinander ab.

Als Kunststoff, insbesondere als hochfester Kunststoff für die Kunststoffhalbschalen ist besonders ein glasfaserverstärkter Kunststoff geeignet, der im Vergleich zum Metallmaterial des Zapfenteils ein wesentlich kleineres, spezifisches Gewicht aufweist. Besonders bevorzugt ist hierbei ein glasfaserverstärkter Kunststoff mit einem Glasfaseranteil von 15 bis 70 %, bevorzugt mit einem Glasfaseranteil von 30 bis 50 % vorgesehen. Besonders geeignet als Kunststoffe, insbesondere als mit Glasfasern verstärkte Kunststoffe, sind Polykaprolaktam-Kunststoffe oder Polyamid-Kunststoffe. Konkrete Beispiel für Kunststoffe wären PA6 und PA66, beide bevorzugt, aber nicht notwendig, glasfaserverstärkt.

Zusätzlich wird ein Verfahren zur Herstellung eines Fahrzeugs und/oder eines Drehgestells beansprucht.

Anhand von Ausführungsbeispielen wird die Erfindung weiter erläutert. Es zeigen:
- Fig. 1 bis 4: Darstellungen einer Ausführungsform mit radial vor einer Vulkanisation auf ein Zapfenteil aufgesteckten Kunstoffhalbschalen mit anschließender Vulkanisation zusammen mit dem Zapfenteil mit einem kreiszylindrischen Zapfenteil ohne Verdrehsicherung;
- Fig. 5 und 6: Darstellungen einer Ausführungsform mit radial aufgesteckten Kunststoffhalbschalen, wobei die Vulkanisation der Elastomerschicht an den Kunststoffhalbschalen ohne Zapfenteil erfolgt bei einem kreiszylindrischen Zapfenteil ohne Verdrehsicherung;
- Fig. 7 bis 11: eine Ausführungsform mit radial vor einer Vulkanisation auf das Zapfenteil aufgesteckten Kunststoffhalbschalen mit anschließender Vulkanisation mit Zapfenteil bei einem kreiszylindrischen Zapfenteil mit Verdrehsicherung durch eine Nut;
- Fig. 12 bis 14: eine Darstellung einer Ausführungsform mit einer Vulkanisation der Elastomerschicht an den Kunststoffhalbschalen ohne Zapfenteil bei radial aufgesteckten Kunststoffhalbschalen und einem kreiszylindrischen Zapfenteil mit Verdrehsicherung;
- Fig. 15 bis 18: Darstelllungen einer Ausführungsform mit radial vor einer Vulkanisation auf das Zapfenteil aufgesteckten Kunststoffhalbschalen und einer Vulkanisation mit Zapfenteil bei einem flachen Zapfenteil mit rechteckigem Querschnitt und einer durch die Pratzengeometrie vorgegebenen Verdrehsicherung;
- Fig. 19 bis 21: mit einer Vulkanisation der Elastomerschicht an den Kunststoffhalbschalen ohne Zapfenteil bei radial auf ein flaches Zapfenteil mit reckteckigem Querschnitt aufgesteckten Halbschalen und einer Verdrehsicherung durch die Pratzengeometrie;
- Fig. 22 bis 25: eine Darstellung einer Ausführungsform mit axial aufgesteckten Kunststoffhalbschalen mit einer Vulkanisation der Elastomerschicht ohne Zapfenteil bei einem kreiszylindrischen Zapfenteil ohne Verdrehsicherung und
- Fig. 26 bis 29: Darstellungen einer Ausführungsform mit axial aufgesteckten Kunststoffhalbschalen mit einer ohne Zapfenteil anvulkanisierten Elastomerschicht bei einem kreiszylindrischen Zapfenteil mit Verdrehsicherung.

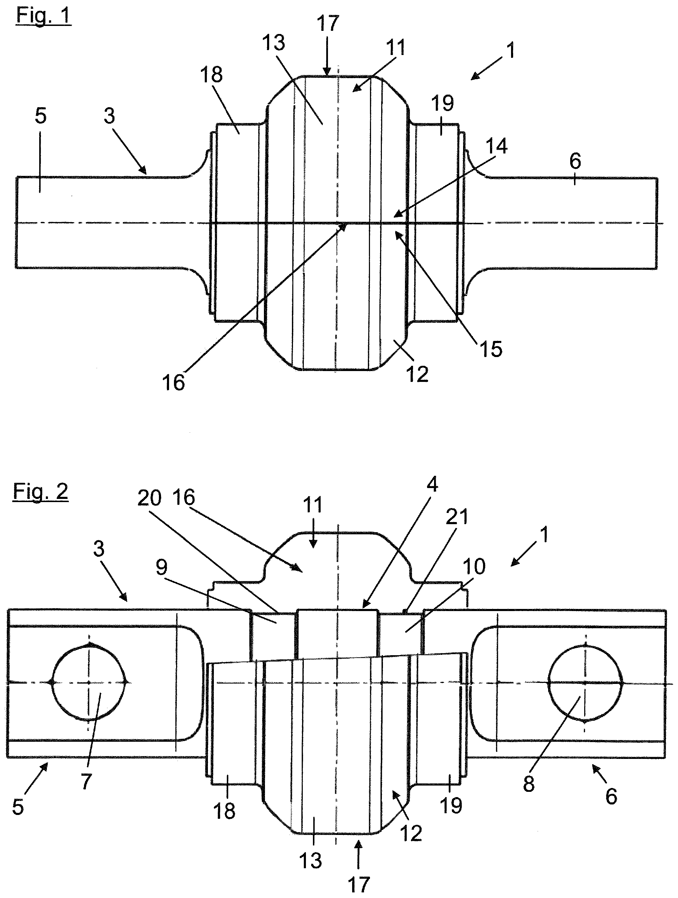

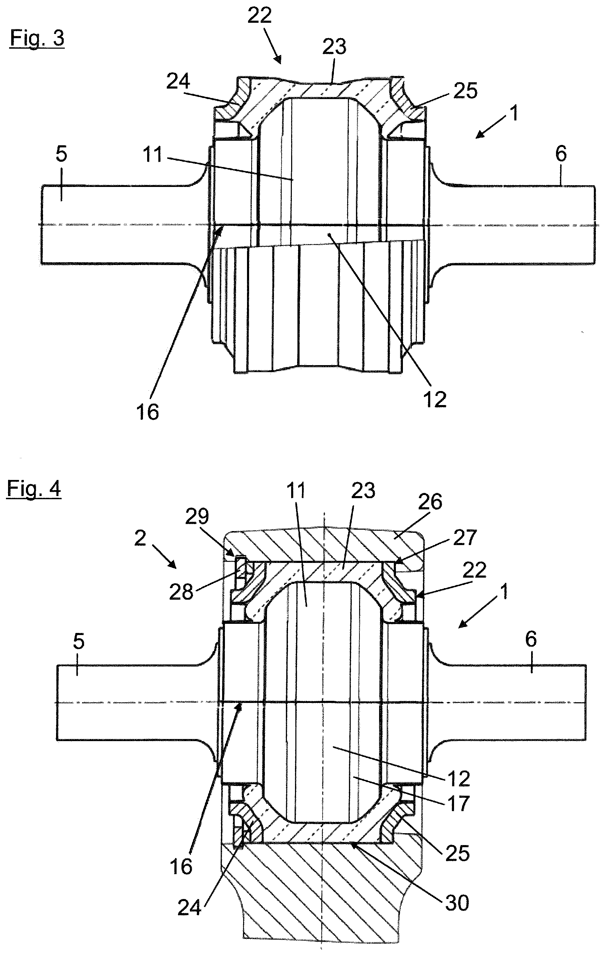

In den teilweise geschnittenen Figuren 1 bis 4 ist ein Kugelzapfen 1 eines in Figur 4 fertig montierten Kugelgelenks 2 gezeigt, der ein langgestrecktes metallisches Zapfenteil 3 mit einem mittleren Kugelinnenteil mit daran beidseitig anschließenden Anschlusspratzen 5, 6 aufweist. Das kreiszylindrische Zapfenteil 3 ist aus einem Rundstahlabschnitt mit kreisrundem Querschnitt hergestellt und an den Anschlusspratzen 5, 6 insbesondere mit einer Bohrung 7, 8 bearbeitet. Weiter sind im Bereich des Kugelinnenteils 4 am Zapfenteil 3 als Bestandteil einer Axialsicherung zwei beabstandete nutenförmig umlaufende Einsparungen 9, 10 angebracht. Auf das Zapfenteil 3 sind im Bereich des Kugelinnenteils 4 zwei Kunststoffhalbschalen 11, 12 quer zur Pratzenrichtung radial aufgesteckt. Die zwei Kunststoffhalbschalen 11, 12 weisen jeweils im Mittenbereich eine Verdickung 13 als Aufwölbung auf und liegen mit Halbschalenrändern 14, 15 an einer in Pratzenrichtung verlaufenden Trennebene 16 aneinander, wobei die jeweiligen Verdickungen 13 ein balliges Kugelteil 17 ausbilden.

Zudem sind an den Kunststoffhalbschalen 11, 12 jeweils seitlich Anformungen gebildet, die im aufgesteckten Zustand beidseitig zum Kugelteil 17 liegende Ringschultern 18, 19 ergeben.

Wie aus Figur 2 ersichtlich sind als Gegenkontur zu den Einsparungen 9, 10 an den Kunststoffhalbschalen 11, 12 in die Einsparungen 9, 10 eingreifende Halbringstege 20, 21 angeformt.

Am Kugelzapfen 1, so wie er in den Figuren 1 und 2 dargestellt ist, wird ein Elastomer-Metall-Element 22 als Ringteil anvulkanisiert, wie in Figur 3 dargestellt mit einer Elastomerschicht 23 auf dem Kugelteil 17 und beidseitig gegenüberliegenden Stützringen 23, 24.

In Figur 4 ist in einem teilweisen Längsschnitt das fertig montierte Kugelgelenk 2 dargestellt mit einem Lagergehäuse 26 mit einem zylindrischen Aufnahmeraum 30, in dem der Kugelzapfen 1 mit dem Kugelteil 17 und dem anvulkanisierten Elastomer-Metall-Element 22 seitlich (hier von links) eingeschoben ist, bis der Stützring 24 an einem umlaufenden Stützsteg 27 im Lagergehäuse 26 abgestützt ist. Zur Aufbringung einer Vorspannung in der Elastomerschicht 23 wird mit einer Pressvorrichtung der Kugelzapfen 1 weiter in den Aufnahmeraum 30 (hier nach rechts) verlagert und in dieser Position mit einem Sicherungsring 28 in einer umlaufenden Sicherungsnut 29 im Aufnahmeraum 30 fixiert.

Bei nachfolgend ähnlichen Ausführungsformen werden für gleiche Elemente die in Verbindung mit der ersten Ausführungsform eingeführten Bezugszeichen weiter verwendet.

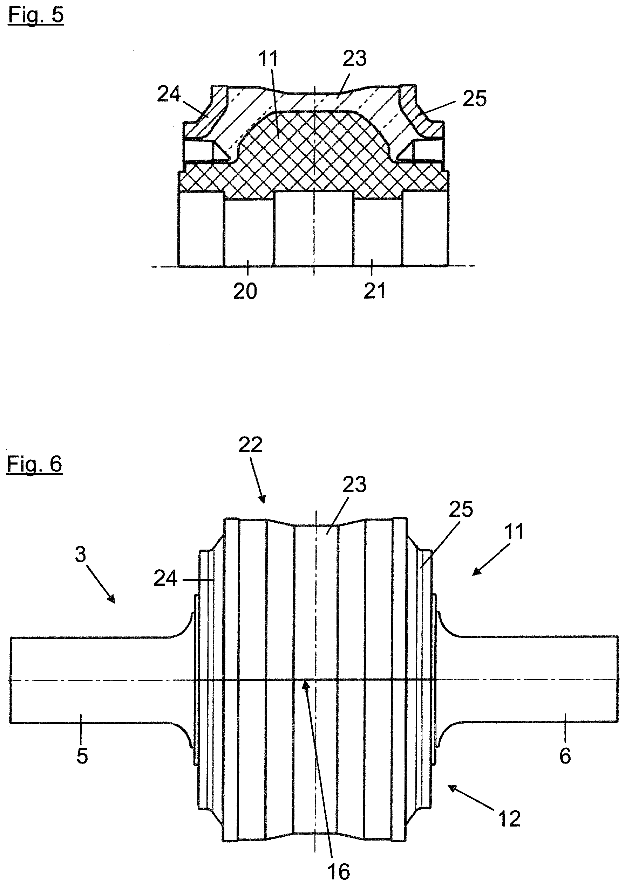

In den Figuren 5 und 6 ist eine der vorstehenden Ausführungsform sehr ähnliche Ausführungsform dargestellt. Im Gegensatz zur ersten Ausführungsform ist jedoch hier der Vulkanisierprozess nicht zusammen mit dem Zapfenteil 3 und den radial aufgesteckten Kunststoffhalbschalen 11, 12 durchgeführt, sondern die Kunststoffhalbschalen 11, 12 sind jeweils mit einer halbringförmigen Elastomerschicht 23 und halben Stützringen 24, 25 ausgerüstet. Die so ausgerüsteten Kunststoffhalbschalen 11, 12 ergeben nach dem axialen Aufstecken auf das Zapfenteil 3 die in Figur 6 dargestellte Form, wobei hier an der Trennebene 16 auch die Elastomerschicht 23 und die Stützringe 24, 25 eine Trennung aufweisen. Das Bauteil nach Figur 6 entspricht damit weitgehend dem Bauteil nach Figur 3 und kann dann wie in Figur 4 dargestellt in einem Lagergehäuse 26 zur Komplettierung des Kugelgelenks 2 aufgenommen werden.

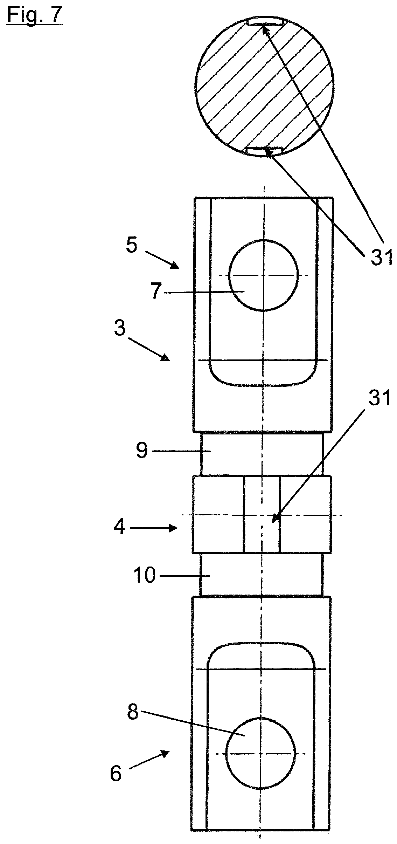

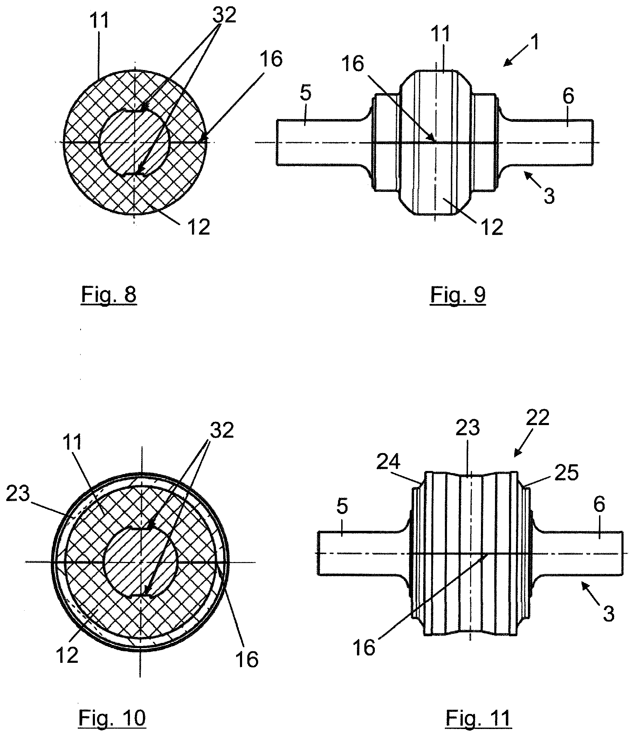

In der Ausführungsform nach den Figuren 7 bis 11 entspricht das Zapfenteil 3 nach Figur 7 weitgehend dem Zapfenteil 3 aus Figur 2 mit einem Kugelinnenteil 4 und beidseitig anschließenden Anschlusspratzen 5, 6 mit Bohrungen 7, 8 und den nutenförmig umlaufenden Einsparungen 9, 10. Zusätzlich zu den in Querrichtung umlaufenden Einsparungen 9, 10 am Kugelinnenteil 4 ist hier in Figur 7 als Bestandteil einer Verdrehsicherung jeweils radial gegenüberliegend eine die Einsparungen 9, 10 verbindende Ausnehmung 31 angebracht, die jeweils in Zapfenlängsrichtung verläuft. In Figur 9 ist der montierte Kugelzapfen 1 entsprechend Figur 1 dargestellt, mit den auf das Zapfenteil 3 radial aufgesetzten Kunststoffhalbschalen 11, 12, die an der Trennebene 16 aneinander liegen. Aus dem mittigen Querschnitt nach Figur 8 ist ersichtlich, dass die Kunststoffhalbschalen 11, 12 jeweils mit einem nach innen gerichteten Eingriffssteg 32 in die Ausnehmungen 31 eingreifen und damit die Verdrehsicherung bilden.

Am Kugelzapfen 1 nach Figur 9 mit dem Zapfenteil und den aufgesteckten Kunststoffhalbschalen 11, 12 wird dann das ringförmige Elastomer-Metall-Element 22 mit der Elastomerschicht 23 und die Stützringen 24, 25 anvulkanisiert, wie dies in der Ansicht nach Figur 11 und dem Schnitt nach Figur 10 ersichtlich ist.

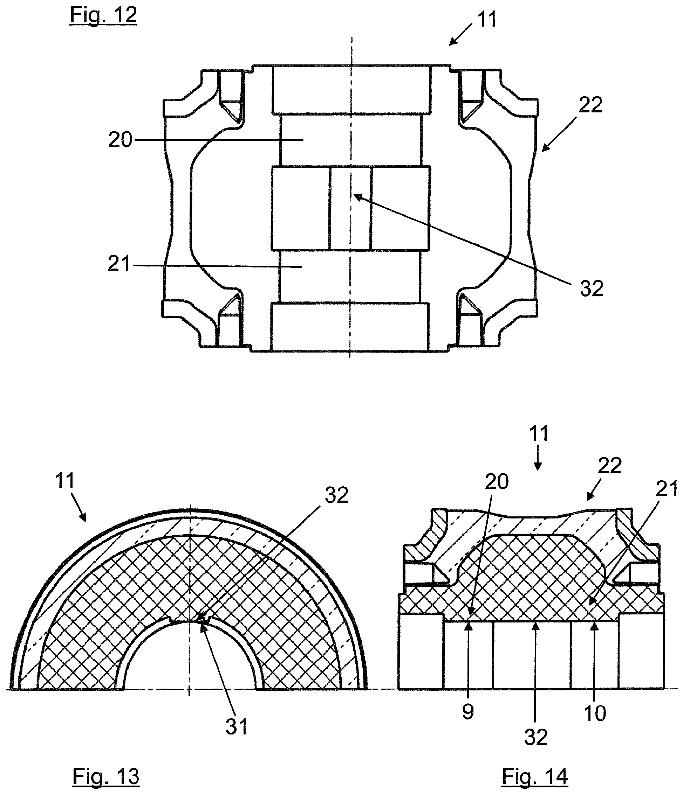

In einer weiteren Ausführungsvariante nach den Figuren 12 bis 14 ist es auch hier in Verbindung mit den Ausnehmungen 31 und den Eingriffsstegen 32 möglich, das Elastomer-Metall-Element 22 jeweils halbringförmig an jeder Kunststoffhalbschale 11, 12 anzuvulkanisieren und die so aufgerüsteten Kunststoffhalbschalen 11, 12 radial auf das Zapfenteil 3 aufzusetzen, wodurch sich wiederum ein Bauteil entsprechend Figur 11 ergibt, welches dann entsprechend Figur 4 in ein Lagergehäuse 26 eingesetzt werden kann.

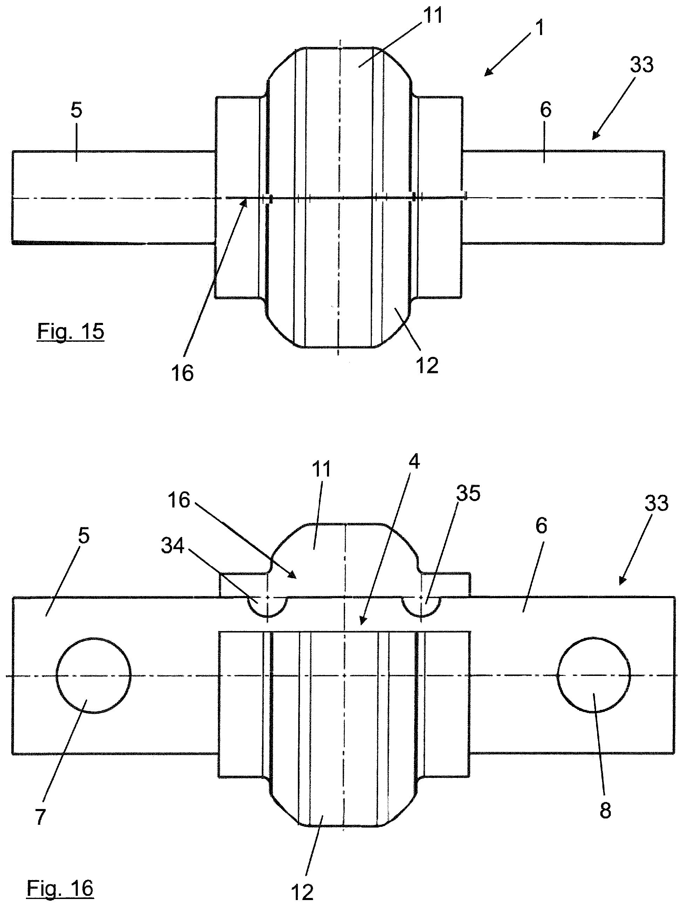

Eine weitere Ausführungsform ist in den Figuren 15 bis 18 dargestellt, wobei als wesentlicher Unterschied zu den bisherigen Ausführungsformen ein Zapfenteil 33 als Flachstahlabschnitt mit einem rechteckigen Querschnitt verwendet ist. Auch hier besteht das Zapfenteil 33 aus einem Kugelinnenteil 4 mit davon abragenden Anschlusspratzen 5, 6 mit Bohrungen 7, 8.

Auch hier sind Kunststoffhalbschalen 11, 12 im Bereich des Kugelinnenteils 4 auf das Zapfenteil 33 radial aufgesteckt, sodass sich wiederum eine Trenneben 16 in Zapfenrichtung ergibt.

Anstelle der nutförmig umlaufenden Einsparungen 9, 10 der vorstehenden Ausführungsformen mit einem kreiszylindrischen Zapfenteil 3 sind bei der vorliegenden Ausführungsform mit dem flachen Zapfenteil 33 als Bestandteil einer Axialsicherung zwei gegeneinander versetzte, nutenförmige Einsparungen 34, 35 jeweils an einer Schmalseite des Zapfenteils 33 angebracht, in die eine entsprechende Gegenkontur als Schaleninnenkontur der Kunststoffhalbschalen 11, 12 eingreift.

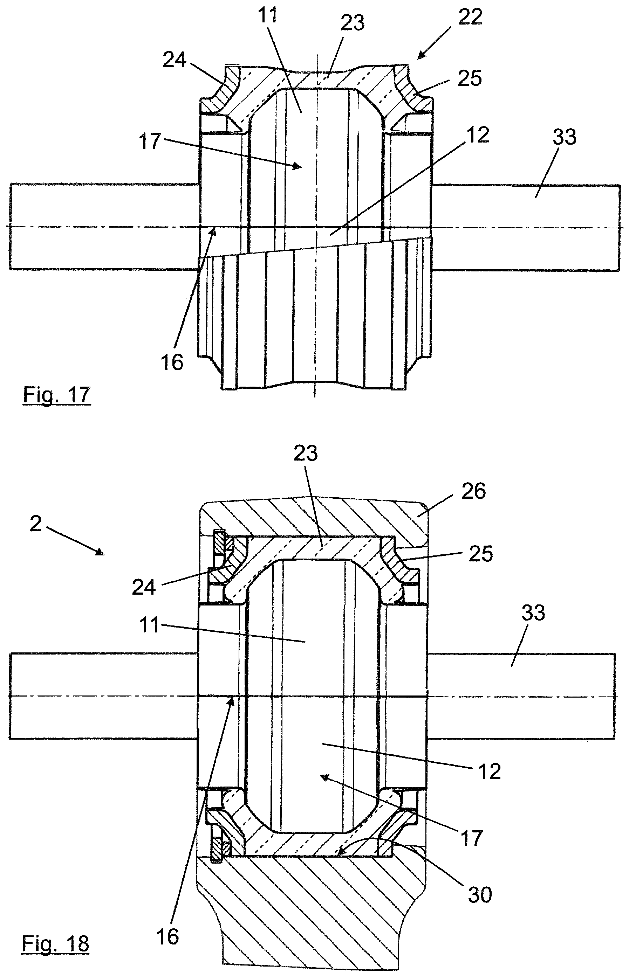

Auch hier wird auf den Kugelzapfen 11 mit dem Zapfenteil 33 und den radial aufgesteckten Kuntstoffhalbschalen 11, 12 ein ringförmiges Elastomer-Metall-Element 22 in einem Vulkanisierprozess aufgebracht, sodass sich damit das Bauteil nach Figur 17 ergibt, das wiederum entsprechend Figur 18 in ein Lagergehäuse 26 zur Komplettierung des Kugelgelenks 2 eingesetzt ist.

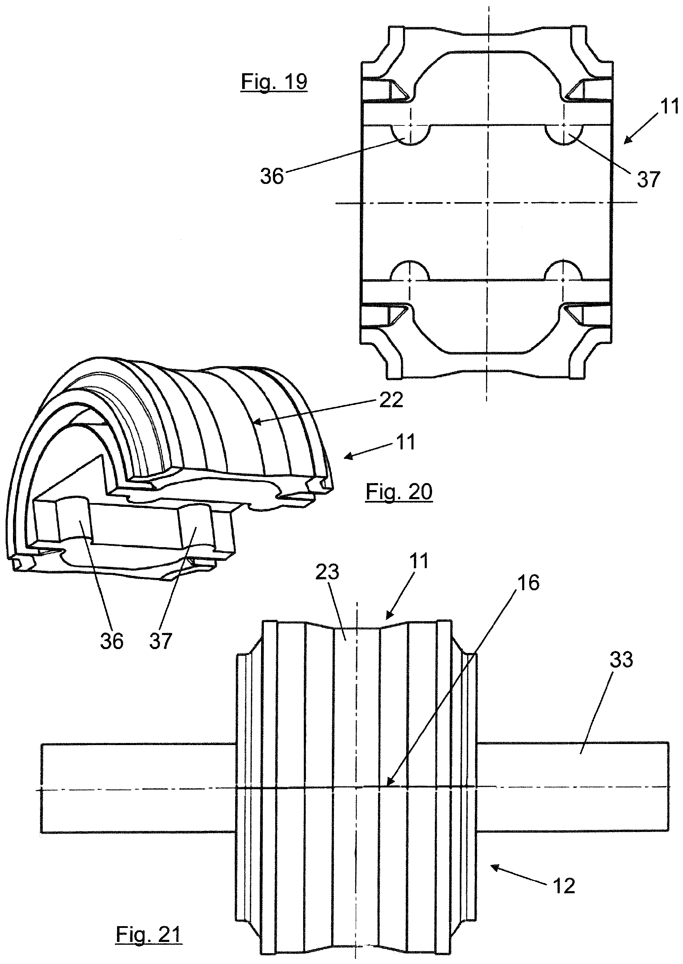

Auch bei der Ausführungsform mit dem Zapfenteil 33 mit rechteckigem Querschnitt können an den Kunststoffhalbschalen 11 und 12 jeweils separat ein halbringförmiges Elastomer-Metall-Element 22 mit einer Elastomerschicht 23 und den Teilen der Stützringe 24, 25 anvulkanisiert werden, wie dies in den Figuren 19 bis 21 dargestellt ist. Nach dem radialen Aufstecken der so aufgerüsteten Kunststoffhalbschalen 11, 12 ergibt sich das Bauteil nach Figur 21, das wiederum entsprechend Figur 18 in das dort gezeigte Lagergehäuse 26 eingesetzt werden kann. Aus der Ansicht von radial unten nach Figur 19 und aus der perspektivischen Ansicht nach Figur 20 der Kunststoffhalbschale 11 sind insbesondere die beidseitig ausgeformten Stegelemente 36, 37 ersichtlich, die in die Ausnehmungen 34, 35 am Zapfenteil 33 eingreifen. Eine Verdrehsicherung ist hier durch die rechteckige Geometrie des Zapfenteils 33 gegeben und bedarf keiner weiteren Maßnahmen.

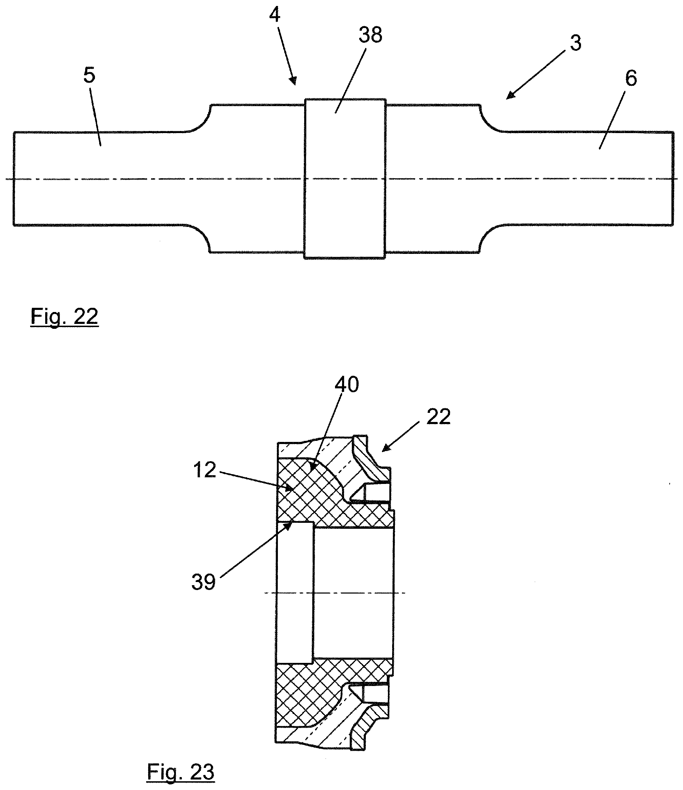

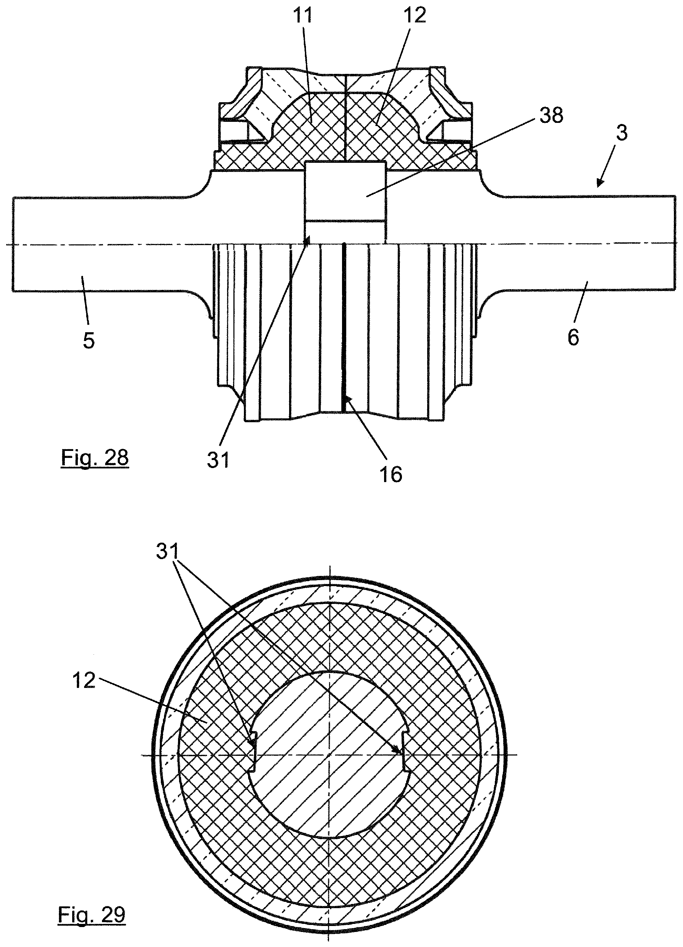

In den Figuren 22 bis 25 und den Figuren 26 bis 29 sind zwei weitere Ausführungsformen der Erfindung dargestellt, die sich von den vorstehenden Ausführungsform dadurch unterscheiden, dass die beiden Kunststoffhalbschalen 11, 12 axial gegeneinander auf das Zapfenteil 3 aufgesteckt sind. Bei den beiden Ausführungsformen ist ein zylindrisches Zapfenteil 3 verwendet. Beide Ausführungsformen sind jedoch auch mit den entsprechenden Anpassungen mit einem flachen Zapfenteil 33 mit rechteckigem Querschnitt ausführbar. Die beiden Ausführungsformen nach den Figuren 22 bis 25 und den Figuren 26 bis 29 sind ähnlich, wobei die erste Ausführungsform keine Verdrehsicherung aufweist und die zweite Ausführungsform mit einer Verdrehsicherung weitergebildet ist.

In Figur 22 ist ein kreiszylindrisches Zapfenteil 3 dargestellt, das auch hier ein Kugelinnenteil 4 mit den Anschlusspratzen 5, 6 aufweist. In der Längsmitte ist hier ein umlaufender Bund 38 ausgeformt, an dem die beiden für eine axiale Aufsteckung mit einer axialen Durchgangsöffnung modifizierten Kunststoffhalbschalen 11, 12 mit Ausnehmungen 39 als Gegenkonturen anliegen und sich axial abstützen. Wie aus den Figuren 23 bis 25 ersichtlich weisen die hier axial aufgesteckten Kunststoffhalbschalen 11, 12 in einem axialen Seitenbereich eine Aufwölbung 40 auf, dergestalt, dass die gegeneinander aufgesteckten Kunststoffhalbschalen 11, 12 mit den Aufwölbungen 40 das Kugelteil 17 ausbilden, wobei hier die Trennebene 16 quer zum Zapfenteil 3 verläuft. Anschließend an die Aufwölbung 40 ist auch hier jeweils eine Ringschulter 18, 19 angeformt.

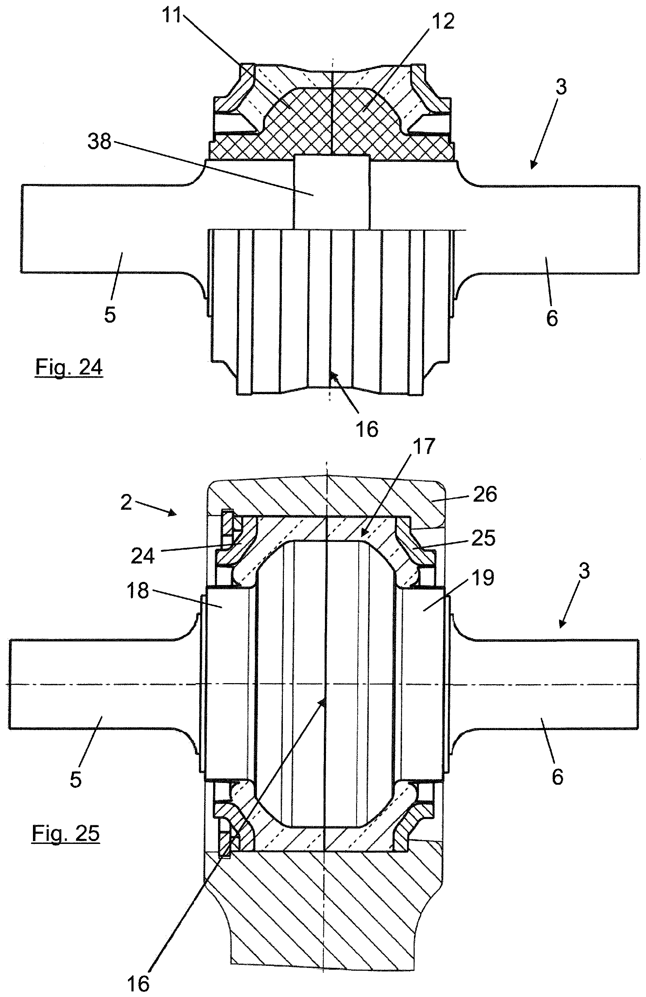

Wie insbesondere aus Figur 23 ersichtlich ist an den Kunststoffhalbschalen 11, 12 bereits vor ihrer Montage auf dem Zapfenteil 3 jeweils ein Elastomer-Metall-Element 22, hier als ringförmig umlaufendes Element anvulkanisiert. Das vormontierte Bauteil nach Figur 24 kann dann wie in Figur 25 dargestellt, in ein Lagergehäuse 26 eingebaut werden, wodurch sich ein Kugelgelenk 2 ergibt entsprechend der Ausführungsform nach Figur 4 mit prinzipiell gleichen Eigenschaften, wobei lediglich die Trennebene 16 in Figur 25 quer zum Zapfenteil 3 verläuft.

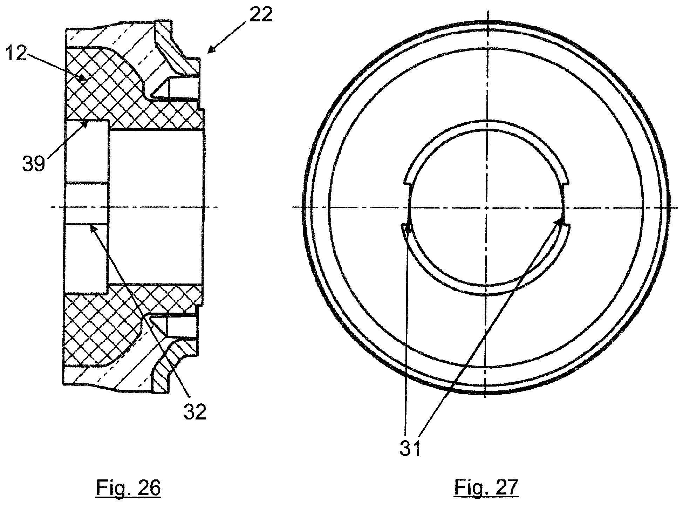

Die Ausführungsform nach den Figuren 22 bis 25 ist in der Ausführungsform nach den Figuren 26 bis 29 mit einer Verdrehsicherung weitergebildet, die der Verdrehsicherung aus den Figuren 7 bis 11 entspricht. Dazu ist im Bund 38 die in Zapfenrichtung verlaufende Ausnehmung 31 angebracht, in die die Kunststoffhalbschalen 11, 12 mit entsprechenden Eingriffsstegen 32 als Gegenkontur im axial aufgesetzten Zustand eingreifen. Im Übrigen entspricht die Ausführungsform nach den Figuren 26 bis 29 der Ausführungsform nach den Figuren 22 bis 25.

**Bezugszeichenliste**

| | | | |
|---|---|---|---|
| 1 | Kugelzapfen | 25 | Stützring |
| 2 | Kugelgelenk | 26 | Lagergehäuse |
| 3 | Zapfenteil (rund) | 27 | Stützsteg |
| 4 | Kugelinnenteil | 28 | Sicherungsring |
| 5 | Anschlusspratze | 29 | Sicherungsnut |
| 6 | Anschlusspratze | 30 | Ausnahmeraum |
| 7 | Bohrung | 31 | Ausnehmung |
| 8 | Bohrung | 32 | Eingriffssteg |
| 9 | Einsparung | 33 | Zapfenteil (flach) |
| 10 | Einsparung | 34 | Ausnehmung |
| 11 | Kunststoffhalbschale | 35 | Ausnehmung |
| 12 | Kunststoffhalbschale | 36 | Stegelement |
| 13 | Verdickung | 37 | Stegelement |
| 14 | Halbschalenrand | 38 | Bund |
| 15 | Halbschalenrand | 39 | Ausnehmung |
| 16 | Trennebene | 40 | Aufwölbung |
| 17 | Kugelteil | | |
| 18 | Ringschulter | | |
| 19 | Ringschulter | | |
| 20 | Halbringsteg | | |
| 21 | Halbringsteg | | |
| 22 | Elastomer-Metall-Element | | |
| 23 | Elastomerschicht | | |
| 24 | Stützring | | |

## Patentansprüche

1. Kugelgelenk, insbesondere für Fahrzeuge,
- mit einem Kugelzapfen (1) als Lagerinnenteil und als erstes Lagerteil, wobei der Kugelzapfen (1) ein Kugelteil (17) als ballige Verdickung und eine vom Kugelteil (17) abragende Anschlusspratze oder zwei beidseitig gegenüberliegend vom Kugelteil (17) abragende Anschlusspratzen (5, 6) aufweist,
- mit einem Lagergehäuse (26) als zweitem Lagerteil, das das Kugelteil (17) umgibt, und
- mit wenigstens einem zwischen dem Kugelteil (17) und dem Lagergehäuse (26) unter Vorspannung angeordneten und das Kugelteil (17) umgreifenden Elastomer-Element (22),
wobei der Kugelzapfen (1) ein langgestrecktes, metallisches Zapfenteil (3) aufweist, das die eine Anschlusspratze oder die beiden Anschlusspratzen (5, 6), sowie ein einteilig und materialeinheitlich daran anschließendes Kugelinnenteil (4) bildet, und
wobei zur Ausbildung des Kugelteils (17) auf das metallische Kugelinnenteil (4) zwei Kunststoffhalbschalen (12, 13) aufgesteckt sind, die eine ballige Verdickung (13) bilden, wobei die zwei Kunststoffhalbschalen mit Halbschalenrändern (14, 15) an einer Trennebene (16) aneinanderliegen und an der Außenkontur des Kugelinnenteils (4) mit einer Schaleninnenkontur als Gegenkontur formschlüssig anliegen und dabei das Kugelinnenteil (4) mit der balligen, quer zur Pratzenrichtung liegenden Verdickung (13) umschließen,
**dadurch gekennzeichnet,**
**dass** die zwei Kunststoffhalbschalen (11, 12) jeweils im Mittenbereich als Verdickung (13) eine Aufwölbung aufweisen,
**dass** die zwei Kunststoffhalbschalen (11, 12) quer zur Pratzenrichtung radial auf das Kugelinnenteil (4) aufgesteckt sind, und mit Halbschalenrändern (15, 16) an einer in Pratzenrichtung verlaufenden Trennebene (16) aneinander liegen, wobei die beiden Aufwölbungen das Kugelteil ausbilden,
**dass** die zwei Kunststoffhalbschalen (11, 12) jeweils eine axiale Durchgangsöffnung und im Seitenbereich eine Aufwölbung aufweisen, wobei die zwei Kunststoffhalbschalen (11, 12) in Pratzenrichtung axial auf das Kugelinnenteil (4) aufgesteckt sind und mit Halbschalenrändern an einer in Pratzenrichtung verlaufenden Trennebene (16) dergestalt aneinanderliegen, dass die beiden gegeneinander gerichteten Aufwölbungen als Verdickung (13) das Kugelteil (17) ausbilden.

2. Kugelgelenk nach Anspruch 1, **dadurch gekennzeichnet, dass** die zwei Kunststoffhalbschalen (11, 12) eines Kugelgelenks (2) als Gleichteile ausgebildet sind und gegebenenfalls aus mehreren Kunststoffhalbschalenteilen zusammengesetzt sind.

3. Kugelgelenk nach Anspruch 1, **dadurch gekennzeichnet,**
**dass** das langgestreckte, metallische Zapfenteil (3) als Halbzeug und Ausgangsmaterial einen kreisförmigen Querschnitt aufweist und ein Rundstahlabschnitt oder ein Stahlrohrabschnitt ist, oder
**dass** das langgestreckte, metallische Zapfenteil (33) als Halbzeug und Ausgangsmaterial einen rechteckigen Querschnitt aufweist und ein Flachstahlabschnitt ist.

4. Kugelgelenk nach einem der Ansprüche 1 bis 3, **dadurch gekennzeichnet, dass** das Kugelinnenteil (4) im Bereich der aufgesteckten Kunststoffhalbschalen (11, 12) eine Außenkontur mit wenigstens einer Ausnehmung (9, 10; 31, 34, 35) und/oder mit wenigstens einer Erhebung aufweist mit entsprechenden Gegenkonturen (20, 21, 32, 36, 37) als Schaleninnenkontur für eine formschlüssige Anlage.

5. Kugelgelenk nach Anspruch 4, **dadurch gekennzeichnet,**
**dass** die wenigstens eine Ausnehmung als Axialsicherung aus einer oder mehreren, vorzugsweise zwei versetzten, nutenförmig umlaufenden Einsparungen (9, 10) an einem Zapfenteil (3) mit kreisrundem Querschnitt und mit radial aufgesteckten Kunststoffhalbschalen (11, 12) ausgebildet ist, oder
**dass** die wenigstens eine Ausnehmung als Axialsicherung aus einer oder mehreren versetzten, vorzugsweise zwei quer zur Pratzenrichtung verlaufenden nutenförmigen Ausnehmungen (34, 35) an einer der gegenüberliegenden Seiten eines Zapfenteils (33) mit rechteckigem Querschnitt und mit radial aufgesteckten Kunststoffhalbschalen (11, 12) ausgebildet ist.

6. Kugelgelenk nach Anspruch 4, **dadurch gekennzeichnet, dass** die wenigstens eine Erhebung als Axialsicherung in einem mittleren Querebenenbereich des Kugelteils (17) als Bund (38) ausgebildet ist mit axial aufgesteckten Kunststoffhalbschalen (11, 12).

7. Kugelgelenk nach Anspruch 4, **dadurch gekennzeichnet, dass** die wenigstens eine Ausnehmung (31) und/oder Erhebung als Verdrehsicherung bei einem Zapfenteil (3) mit kreisrundem Querschnitt in Zapfenlängsrichtung bei axial oder radial aufgesteckten Kunststoffhalbschalen (11, 12) ausgebildet ist.

8. Kugelgelenk nach einem der Ansprüche 1 bis 7, **dadurch gekennzeichnet,**
**dass** das wenigstens eine Elastomer-Element (22) eine Elastomerschicht (23) aufweist, die am Kugelteil (17) anvulkanisiert ist, dergestalt
**dass** die Elastomerschicht (23) separat und zweiteilig auf jeder der beiden Kunststoffhalbschalen (11, 12) anvulkanisiert ist und die beiden aufgesteckten Kunststoffhalbschalenteile (11, 12) die komplette Elastomerschicht (23) am Kugelteil (17) ergeben, oder
**dass** die Elastomerschicht (23) durchgehend einteilig am Kugelteil (17) an den am Kugelinnenteil (4) aufgesteckten Kunststoffhalbschalen (11, 12) anvulkanisiert ist.

9. Kugelgelenk nach Anspruch 8, **dadurch gekennzeichnet, dass** das wenigstens eine Elastomer-Element ein einteiliges oder zweiteiliges Elastomer-Metall-Element (22) ist mit zusätzlich zur Elastomerschicht (23) jeweils seitlich anvulkanisierten Stützringen (24, 25).

10. Kugelgelenk nach Anspruch 8 oder 9, **dadurch gekennzeichnet, dass** zusätzlich zum Kugelteil (17) beidseitig daran anschließende an den Kunststoffhalbschalen (11, 12) ausgebildete, zapfenseitige Ringschultern (18, 19) ausgebildet sind, wobei an beiden axial gegenüberliegenden Seiten der Elastomerschicht (23) jeweils ein vorzugsweise metallischer Stützring (24, 25) anvulkanisiert ist, zur Aufbringung einer Vorspannung in der Elastomerschicht (23), und dass das Lagergehäuse (26) einen Aufnahmeraum (30), vorzugsweise einen zylindrischen Aufnahmeraum (30), aufweist, in dem der Kugelzapfen (1) mit dem Kugelteil (17) gegebenenfalls mit Ringschultern (18, 19) und der umgebenden Elastomerschicht (23) mit den Stützringen (24, 25) aufgenommen ist.

11. Kugelgelenk nach Anspruch 10, **dadurch gekennzeichnet, dass** die Elastomerschicht (23) an der Innenseite des Aufnahmeraums (30) ortsfest durch Vorspannung anliegt, indem der Kugelzapfen (1) axial seitlich in den Aufnahmeraum (30) eingesetzt und mit einem Stützring (25) an einem umlaufenden Stützsteg (27) im Aufnahmeraum (30) abgestützt ist und der gegenüberliegende Stützring (24) nach einer Verlagerung durch eine mit einer Pressvorrichtung aufgebrachten, axialen Einpresskraft als Vorspannkraft in der verlagerten Position mit einem Sicherungsring (28) in einer umlaufenden Sicherungsnut (29) im Aufnahmeraum (30) fixiert ist.

12. Fahrzeug, insbesondere Nutzfahrzeug, mit einem Kugelgelenk (2) nach einem der Ansprüche 1 bis11.

13. Drehgestell, insbesondere für ein Schienenfahrzeug, mit einem Kugelgelenk (2) nach einem der Ansprüche 1 bis 11.

## Claims

1. Ball joint, in particular for vehicles,
- comprising a ball stud (1) as the inner bearing part and as a first bearing component, wherein the ball stud (1) comprises a ball portion (17) as a spherical thickening and one connection lug projecting from the ball portion (17) or two opposite connection lugs (5, 6) projecting from the ball portion (17),
- comprising a bearing housing (26) as a second bearing component, which surrounds the ball portion (17),
- comprising at least one elastomer element (22), arranged under preload between the ball portion (17) and the bearing housing (26), and enclosing the ball portion (17),
wherein the ball stud (1) comprises an elongated metallic shaft portion (3), which forms the one or the two connection lugs (5, 6), and an integrally and materially uniform ball core portion (4) adjoining the shaft portion, and
wherein, to form the ball portion (17), two plastic half-shells (12, 13) are fitted onto the metallic ball core portion (4), which form a spherical thickening (13), wherein the two plastic half-shells abut one another with shell edges (14, 15) along a parting plane (16), and rest in a form-fitting manner with an inner shell contour as counter-contour against the outer contour of the ball core portion (4), thereby enclosing the ball core portion (4) with the spherical thickening (13) transverse to the lug direction,
**characterized in that**
the two plastic half-shells (11, 12) each have a bulge as thickening (13) in the central region,
that the two plastic half-shells (11, 12) are fitted radially onto the ball core portion (4) transverse to the lug direction, and abut each other with shell edges (15, 16) along a parting plane (16) extending in the lug direction, the two bulges forming the ball portion, or
that the two plastic half-shells (11, 12) each have an axial through-opening and a bulge in the side region, wherein the two plastic half-shells (11, 12) are fitted axially onto the ball core portion (4) in the lug direction and abut one another with shell edges along a parting plane (16) extending in the lug direction such that the two mutually facing bulges form the thickening (13) as the ball portion (17).

2. Ball joint according to claim 1, **characterized in that** the two plastic half-shells (11, 12) of the ball joint (2) are configured as identical parts and optionally composed of multiple plastic half-shell elements.

3. Ball joint according to claim 1, **characterized in that**
the elongated metallic shaft portion (3) as semi-finished product and base material has a circular cross-section and is a round steel section or a steel tube section, or
that the elongated metallic shaft portion (33) as semi-finished product and base material has a rectangular cross-section and is a flat steel section.

4. Ball joint according to one of claims 1 to 3, **characterized in that** the ball core portion (4) in the region of the fitted plastic half-shells (11, 12) has an outer contour with at least one recess (9, 10; 31, 34, 35) and/or with at least one elevation having corresponding counter-contours (20, 21, 32, 36, 37) as inner shell contour for a form-fitting engagement.

5. Ball joint according to claim 4, **characterized in that**
the at least one recess as axial retention comprises one or more, preferably two offset, groove-like circumferential recesses (9, 10) on a shaft portion (3) with circular cross-section and radially fitted plastic half-shells (11, 12), or
that the at least one recess as axial retention comprises one or more, preferably two, groove-like recesses (34, 35) running transverse to the lug direction on one of the opposite sides of a shaft portion (33) with rectangular cross-section and radially fitted plastic half-shells (11, 12).

6. Ball joint according to claim 4, **characterized in that** the at least one elevation as axial retention is formed as a collar (38) in a central transverse region of the ball portion (17), with axially fitted plastic half-shells (11, 12).

7. Ball joint according to claim 4, **characterized in that** the at least one recess (31) and/or elevation is configured as a rotational lock on a shaft portion (3) with circular cross-section in the shaft longitudinal direction, with axially or radially fitted plastic half-shells (11, 12).

8. Ball joint according to one of claims 1 to 7, **characterized in that**
the at least one elastomer element (22) comprises an elastomer layer (23) vulcanized onto the ball portion (17), such that
the elastomer layer (23) is separately and in two parts vulcanized onto each of the two plastic half-shells (11, 12), and the two fitted plastic half-shell parts (11, 12) form the complete elastomer layer (23) on the ball portion (17), or
that the elastomer layer (23) is integrally formed and vulcanized continuously onto the ball portion (17) at the plastic half-shells (11, 12) fitted onto the ball core portion (4).

9. Ball joint according to claim 8, **characterized in that** the at least one elastomer element is a one-piece or two-piece elastomer-metal element (22) comprising, in addition to the elastomer layer (23), support rings (24, 25) vulcanized laterally thereon.

10. Ball joint according to claim 8 or 9, **characterized in that**
in addition to the ball portion (17), shaft-side annular shoulders (18, 19) are formed on the plastic half-shells (11, 12) on both sides, wherein a preferably metallic support ring (24, 25) is vulcanized on each axially opposing side of the elastomer layer (23) for applying a preload in the elastomer layer (23), and
that the bearing housing (26) comprises a receiving space (30), preferably a cylindrical receiving space (30), in which the ball stud (1) with the ball portion (17), optionally with annular shoulders (18, 19), and the surrounding elastomer layer (23) with the support rings (24, 25) is received.

11. Ball joint according to claim 10, **characterized in that** the elastomer layer (23) rests fixedly in place on the inner side of the receiving space (30) due to a preload, **in that** the ball stud (1) is inserted laterally in the axial direction into the receiving space (30) and supported with one support ring (25) against a circumferential support web (27) in the receiving space (30), and the opposing support ring (24), after a displacement by an axial pressing force applied with a pressing device as preload force, is fixed in the displaced position with a retaining ring (28) in a circumferential retaining groove (29) in the receiving space (30).

12. Vehicle, in particular utility vehicle, comprising a ball joint (2) according to any one of claims 1 to 11.

13. Bogie, in particular for a rail vehicle, comprising a ball joint (2) according to any one of claims 1 to 11.

## Revendications

1. Articulation à rotule, notamment pour des véhicules,
- avec un pivot de rotule (1) en tant qu'élément interne de palier et premier élément de palier, le pivot de rotule (1) comportant une partie sphérique (17) formant un renflement bombé et une patte de liaison s'étendant à partir de la partie sphérique (17) ou deux pattes de liaison opposées (5, 6) s'étendant de part et d'autre de la partie sphérique (17),
- avec un boîtier de palier (26) en tant que second élément de palier, qui entoure la partie sphérique (17), et
- avec au moins un élément en élastomère (22) disposé sous précontrainte entre la partie sphérique (17) et le boîtier de palier (26) et entourant la partie sphérique (17),
le pivot de rotule (1) comportant une partie de tige métallique allongée (3) qui forme la ou les pattes de liaison (5, 6) ainsi qu'une partie centrale sphérique (4) attenante à celle-ci, réalisée d'une seule pièce et d'un seul matériau, et
deux demi-coquilles en plastique (12, 13) étant emboîtées sur la partie centrale sphérique métallique (4) pour former la partie sphérique (17) sous la forme d'un renflement sphérique (13), les deux demi-coquilles étant appliquées l'une contre l'autre par des bords de demi-coquille (14, 15) le long d'un plan de joint (16) et s'ajustant de façon complémentaire contre le contour externe de la partie centrale sphérique (4) au moyen d'un contour intérieur servant de contre-forme, de sorte qu'elles enveloppent la partie centrale sphérique (4) avec le renflement sphérique (13) s'étendant transversalement à la direction des pattes,
**caractérisée en ce que**
les deux demi-coquilles en plastique (11, 12) présentent chacune, dans leur partie centrale en guise de renflement (13), une protubérance,
les deux demi-coquilles en plastique (11, 12) étant emboîtées radialement sur la partie centrale sphérique (4) transversalement à la direction des pattes et appliquées l'une contre l'autre par des bords de demi-coquille (15, 16) le long d'un plan de joint (16) s'étendant dans la direction des pattes, les deux protubérances formant la partie sphérique, ou
les deux demi-coquilles en plastique (11, 12) présentent chacune une ouverture traversante axiale et une protubérance dans la région latérale, les deux demi-coquilles en plastique (11, 12) étant emboîtées axialement sur la partie centrale sphérique (4) dans la direction des pattes et appliquées l'une contre l'autre par des bords de demi-coquille le long d'un plan de joint (16) s'étendant dans la direction des pattes, de sorte que les deux protubérances opposées forment, en tant que renflement (13), la partie sphérique (17).

2. Articulation à rotule selon la revendication 1, **caractérisée en ce que** les deux demi-coquilles en plastique (11, 12) d'une articulation à rotule (2) sont configurées comme pièces identiques et éventuellement constituées de plusieurs éléments de demi-coquille en plastique.

3. Articulation à rotule selon la revendication 1, **caractérisée en ce que**
la partie de tige métallique allongée (3), en tant que demi-produit et matériau de base, présente une section circulaire et est un tronçon d'acier rond ou un tronçon de tube en acier, ou
la partie de tige métallique allongée (33), en tant que demi-produit et matériau de base, présente une section rectangulaire et est un tronçon d'acier plat.

4. Articulation à rotule selon l'une des revendications 1 à 3, **caractérisée en ce que** la partie centrale sphérique (4), dans la zone des demi-coquilles en plastique (11, 12) emboîtées, présente un contour externe avec au moins une échancrure (9, 10 ; 31, 34, 35) et/ou au moins une protubérance, des contre-formes correspondantes (20, 21, 32, 36, 37) étant prévues sur la face intérieure des demi-coquilles en tant que contours intérieurs de celles-ci pour un ajustement de forme.

5. Articulation à rotule selon la revendication 4, **caractérisée en ce que**
au moins une échancrure servant de sécurisation axiale est formée par une ou plusieurs découpes en forme de rainure, de préférence deux, disposées de manière décalée et s'étendant de façon annulaire (9, 10) sur une partie de tige (3) de section circulaire, des demi-coquilles en plastique (11, 12) étant emboîtées radialement sur ladite partie de tige, ou
au moins une échancrure servant de sécurisation axiale est formée par une ou plusieurs échancrures en forme de rainure décalées, de préférence deux, s'étendant transversalement à la direction des pattes (34, 35) sur l'un des côtés opposés d'une partie de tige (33) de section rectangulaire, des demi-coquilles en plastique (11, 12) étant emboîtées radialement sur ladite partie de tige.

6. Articulation à rotule selon la revendication 4, **caractérisée en ce que** au moins une protubérance servant de sécurisation axiale est formée, dans la zone médiane selon un plan transversal de la partie sphérique (17), sous la forme d'un collet (38), les demi-coquilles en plastique (11, 12) étant emboîtées axialement.

7. Articulation à rotule selon la revendication 4, **caractérisée en ce que** au moins une échancrure (31) et/ou une protubérance servant d'antirotation est prévue sur une partie de tige (3) de section circulaire, dans le sens longitudinal du pivot, lorsque des demi-coquilles en plastique (11, 12) sont emboîtées axialement ou radialement.

8. Articulation à rotule selon l'une des revendications 1 à 7, **caractérisée en ce que** au moins un élément en élastomère (22) comporte une couche d'élastomère (23) vulcanisée sur la partie sphérique (17), de sorte que
la couche d'élastomère (23) est vulcanisée séparément, en deux parties, sur chacune des deux demi-coquilles en plastique (11, 12), les deux demi-coquilles (11, 12) emboîtées constituant ensemble la couche d'élastomère (23) complète sur la partie sphérique (17), ou
la couche d'élastomère (23) est vulcanisée de manière continue et en une seule pièce sur la partie sphérique (17) sur les demi-coquilles en plastique (11, 12) emboîtées sur la partie centrale sphérique (4).

9. Articulation à rotule selon la revendication 8, **caractérisée en ce que** au moins un élément en élastomère est un élément élastomère-métal (22) en une seule pièce ou en deux pièces, avec, en plus de la couche d'élastomère (23), des anneaux de support (24, 25) vulcanisés latéralement.

10. Articulation à rotule selon la revendication 8 ou 9, **caractérisée en ce que**
en plus de la partie sphérique (17), des épaulements annulaires côté pivot (18, 19) sont formés de chaque côté de ladite partie sphérique, adjacents à celle-ci et formés sur les demi-coquilles en plastique (11, 12), un anneau de support (24, 25), de préférence métallique, étant vulcanisé sur chacune des deux faces axiales opposées de la couche d'élastomère (23), afin d'appliquer une précontrainte dans la couche d'élastomère (23), et
le boîtier de palier (26) comporte un espace de réception (30), de préférence cylindrique, dans lequel le pivot de rotule (1) avec la partie sphérique (17), éventuellement pourvue d'épaulements annulaires (18, 19), et la couche d'élastomère (23) environnante avec les anneaux de support (24, 25) est logé.

11. Articulation à rotule selon la revendication 10, **caractérisée en ce que** la couche d'élastomère (23) est appliquée de manière fixe, par précontrainte, contre la face interne de l'espace de réception (30), **en ce que** le pivot de rotule (1) est inséré axialement par le côté dans l'espace de réception (30) et est supporté par un anneau de support (25) sur une collerette périphérique de support (27) disposée à l'intérieur de l'espace de réception (30), et **en ce que** l'anneau de support opposé (24), après un déplacement sous l'effet d'une force de pressage axiale appliquée au moyen d'un dispositif de pressage en tant que force de précontrainte, est fixé, dans sa position déplacée, par un anneau de verrouillage (28) dans une rainure périphérique de verrouillage (29) de l'espace de réception (30).

12. Véhicule, notamment véhicule utilitaire, avec une articulation à rotule (2) selon l'une des revendications 1 à 11.

13. Bogie, notamment pour un véhicule ferroviaire, avec une articulation à rotule (2) selon l'une des revendications 1 à 11.
